# EUROPEAN PATENT APPLICATION

(11) **EP 3 771 282 A1**
(43) Date of publication of application: **27.01.2021**
(21) Application number: 19772073.3
(22) Date of filing: 22.03.2019
(51) Int. Cl.: H04W 74/08

(54) **METHOD RUNNING ON USER EQUIPMENT, AND USER EQUIPMENT**

(30) Priority: 22.03.2018 CN 201810243818
(71) Applicant: Sharp Kabushiki Kaisha, Sakai-shi Osaka 590-8522 (JP)
(72) Inventor: ZHANG, Chongming, Shanghai 201206 (CN); YAMADA, Shohei, Sakai City, Osaka 590--8522 (JP); LUO, Chao, Shanghai 201206 (CN); LIU, Renmao, Shanghai 201206 (CN)
(74) Representative: Müller-Boré & Partner Patentanwälte PartG mbB
(86) International application number: PCT/CN2019/079211
(87) International publication number: WO 2019/179514

(57) **Abstract**

The present disclosure provides a method operating on User Equipment (UE). The method includes counting the number of transmissions of a preamble in a random access procedure by using a preamble transmission counter (COUNTER); and when the value of the preamble transmission counter (COUNTER) indicates that the number of transmissions of the preamble reaches or exceeds the preset maximum number of transmissions, determining whether to indicate a random access problem to the upper layer of the UE based on one of the following: (1) whether the preamble transmitted in the random access procedure corresponds to a reference signal of a secondary cell; or (2) whether a physical random access channel occasion adopted in the random access procedure corresponds to the reference signal of the secondary cell.

## Description

### Technical Field

The application relates to the technical field of wireless communications, and particularly, to a method operating on User Equipment (UE) and UE.

### Background

With the rapid growth of mobile communications and great progress of technology, the world will move toward a fully interconnected network society where anyone or anything can acquire information and share data anytime and anywhere. It is estimated that there will be 50 billion interconnected devices by 2020, of which only about 10 billion may be mobile phones and tablet computers. The rest are not machines communicating with human beings but machines communicating with one another. Therefore, how to design a system to better support the Internet of Everything is a subject needing further and intensive research.

For this purpose, at the Third Generation Partnership Project (3GPP) RAN#64 plenary session held in March 2016, a research topic on new 5G radio access technology was proposed (see non-patent literature: **RP-160671** New SID Proposal: Study on New Radio Access Technology). In description of this work project, the working frequency band of the future new communication system can be extended to 100 GHz, which can satisfy at least the requirements of enhanced mobile broadband services, the communication requirements of a large number of sets of UE in the Internet of Things, and the requirements of services requiring high reliability at the same time. The research work on this project ends in 2018.

In the research of this subject, it is planned to transmit information using beams/beam forming, which specifically includes, during communication using high frequencies, transmitting narrower beams to cope with the characteristic of excessively quick fading of channels at high frequencies. However, information transmission using narrower beams is susceptible to external changes, for example, mobile phone rotation or obstruction by other objects.

In transmission scenarios using beam forming, once a valid beam signal serving data/information transmission of UE weakens or is lower than a pre-configured threshold, the data/information transmission is interrupted, and it may be considered that a beam failure has occurred. The UE will transmit related request information (for example, a beam failure recovery request) to a network to request reconfiguration or recovery of a valid operating beam. Such request information may be a specific preamble. Once the base station receives the specific preamble on the configured random access PRACH, the base station will know that the corresponding UE has failed in beam transmission and that the UE requests for recovery. In order to respond to the UE's request, the base station will transmit a PDCCH in the corresponding downlink beam direction, and the PDCCH is scrambled by the UE's C-RNTI. When the UE receives the PDCCH correctly, the recovery request is considered as responded, and the whole beam transmission failure recovery procedure is completed successfully.

Beam forming may be used together with carrier aggregation. The base station may configure a plurality of carriers for the UE, and different carriers may correspond to different serving cells, including at least one primary cell (Pcell) and one or more secondary cells (Scell). Both the primary cell and the secondary cells may use the beam forming technology. If a beam transmission fails, the failure can be recovered. Theoretically, the primary and secondary cells may adopt the exact same beam transmission failure recovery procedure. In practical application, however, there are certain problems as follows:
The primary cell is always configured with PRACH resources, and the secondary cell is not necessarily configured with PRACH resources. When the secondary cell is not configured with the PRACH resources, once the beam transmission fails in the secondary cell, it is necessary to use the PRACH transmission resources of the primary cell to transmit the preamble indicating the beam failure recovery request. Next, the UE waits for receiving a response transmitted by the base station on the secondary cell. For the random access procedure in the primary cell, if the procedure cannot be successfully completed, for example, if the number of transmissions of the preamble exceeds the maximum allowed number of transmissions, the MAC layer will indicate to the upper layer that there is a random access problem, which results in the release and re-setup of the link. In this procedure, the link performance of the primary cell may however be able to work normally. As a result, the false alarm of the random access problem can lead to unnecessary link release and re-setup, resulting in wasted resources, which is a problem that needs to be solved.

In addition, in the existing mechanism, the trigger of random access is decided by the numerical value of the counter BFI_COUNTER. In one situation, when the numerical value of BFI_COUNTER is equal to a specific value, a first random access procedure is triggered. The current random access procedure may fail. The occurrence of the failure means that the UE's link in the secondary cell has a problem and cannot be recovered. At the same time, BFI_COUNTER may be recounted and be equal to a specific value again, thus triggering the random access procedure again, causing the UE to continue to transmit random access on a secondary cell where a link problem has occurred. How to avoid such situations is a problem that needs to be solved.

### Summary

The purpose of embodiments of the application is to address at least the above problems and/or disadvantages, and to provide at least the advantages described below.

According to one embodiment of the present disclosure, a method operating on User Equipment (UE) is provided. The method may include counting the number of transmissions of a preamble in a random access procedure by using a preamble transmission counter (COUNTER); and when the value of the preamble transmission counter (COUNTER) indicates that the number of transmissions of the preamble reaches or exceeds the preset maximum number of transmissions, determining whether to indicate a random access problem to the upper layer of the UE based on one of the following: (1) whether the preamble transmitted in the random access procedure corresponds to a reference signal of a secondary cell; or (2) whether a physical random access channel occasion adopted in the random access procedure corresponds to the reference signal of the secondary cell.

According to one embodiment of the present disclosure, a method operating on User Equipment (UE) is provided. The method may include determining the state of a random access procedure by using a preamble transmission counter (COUNTER) or a counter BFI Counter related to Beam Failure Instance (BFI); and deactivating a secondary cell based on one of the following according to the state of the random access procedure: (1) a preamble in the random access procedure is transmitted on the secondary cell and the random access procedure is triggered by beam failure recovery; (2) when the random access procedure is not successfully completed, a beam failure recovery procedure is not successfully completed, and the beam failure recovery procedure is a beam failure recovery procedure related to the secondary cell or a beam failure recovery procedure performed on the secondary cell; or (3) when the random access procedure is related to beam failure recovery on the secondary cell, a beam failure recovery timer is initiated, and the beam failure recovery timer expires.

According to one embodiment of the present disclosure, a method operating on User Equipment (UE) is provided. The method may include transmitting information indicating that beam failure recovery of a secondary cell has failed to a base station to indicate to the base station that the beam failure recovery of the secondary cell has failed; and receiving an indication/message of deactivating the secondary cell from the base station, and deactivating the secondary cell.

According to one embodiment of the present disclosure, a method operating on User Equipment (UE). The method includes, when a random access procedure triggered by beam failure recovery is not successfully completed, determining that a beam failure recovery procedure has failed, and suspending the beam failure detection and the beam failure recovery procedure; indicating information related to a beam failure recovery procedure failure to an upper layer; and receiving a corresponding indication from the upper layer to initiate the beam failure detection and the beam failure recovery procedure.

According to one embodiment of the present disclosure, User Equipment (UE) is provided. The UE includes a memory for storing instructions and a processor. The processor is configured to execute the instructions stored in the memory to count the number of transmissions of a preamble in a random access procedure by using a preamble transmission counter (COUNTER); and when the value of the preamble transmission counter (COUNTER) indicates that the number of transmissions of the preamble reaches or exceeds the preset maximum number of transmissions, determine whether to indicate a random access problem to the upper layer (preferably, the upper layer may be the RRC layer of the UE) of the UE based on one of the following: (1) whether the preamble transmitted in the random access procedure corresponds to a reference signal of a secondary cell; or (2) whether a physical random access channel occasion adopted in the random access procedure corresponds to the reference signal of the secondary cell.

According to one embodiment of the present disclosure, a User Equipment (UE) is provided. The UE includes a memory for storing instructions and a processor. The processor is configured to execute the instructions stored in the memory to determine the state of a random access procedure by using a preamble transmission counter (COUNTER) or a counter BFI_Counter related to Beam Failure Instance (BFI); and deactivate a secondary cell based on one of the following according to the state of the random access procedure: (1) a preamble in the random access procedure is transmitted on the secondary cell and the random access procedure is triggered by beam failure recovery; (2) when the random access procedure is not successfully completed, a beam failure recovery procedure is not successfully completed, and the beam failure recovery procedure is a beam failure recovery procedure related to the secondary cell or a beam failure recovery procedure performed on the secondary cell; or (3) when the random access procedure is related to beam failure recovery on the secondary cell, a beam failure recovery timer is initiated, and the beam failure recovery timer expires.

According to one embodiment of the present disclosure, User Equipment (UE) is provided. The UE includes a memory for storing instructions and a processor. The processor is configured to execute the instructions stored in the memory to transmit information indicating that beam failure recovery of a secondary cell has failed to a base station to indicate to the base station that the beam failure recovery of the secondary cell has failed; and receive an indication/message of deactivating the secondary cell from the base station, and deactivate the secondary cell.

According to one embodiment of the present disclosure, User Equipment (UE) is provided. The UE includes a memory for storing instructions and a processor. The processor is configured to execute the instructions stored in the memory to, when a random access procedure triggered by beam failure recovery is not successfully completed, determine that a beam failure recovery procedure has failed, and suspend the beam failure detection and the beam failure recovery procedure; indicate information related to a beam failure recovery procedure failure to an upper layer; and receive a corresponding indication from the upper layer to initiate the beam failure detection and the beam failure recovery procedure.

### Brief Description of Drawings

According to the following description with reference to the accompanying drawings, the above and other aspects, features and advantages of some embodiments of the application will be clearer.
FIG. 1 is a flowchart of a method operating on UE according to one embodiment of the present disclosure;
FIG. 2 is a flowchart of a method operating on UE according to another embodiment of the present disclosure;
FIG. 3 is a flowchart of a method operating on UE according to another embodiment of the present disclosure;
FIG. 4 is a flowchart of a method operating on UE according to another embodiment of the present disclosure;
FIG. 5 is a flowchart of a method operating on UE according to another embodiment of the present disclosure; and
FIG. 6 is a block diagram of UE according to one embodiment of the present disclosure.

### Detailed Description

The following describes the present invention in detail with reference to the accompanying drawings and specific embodiments. It should be noted that the present invention is not limited to the specific embodiments described below. In addition, for simplicity, detailed description of the known art not directly related to the present invention is omitted to prevent confusion with respect to the understanding of the present invention.

Prior to the specific description, several terms mentioned in the present invention are illustrated as follows. The terms involved in the present invention shall have the meanings set forth below, unless otherwise indicated.
UE: User Equipment
RLF: Radio Link Failure
NR: New Radio
LTE: Long Term Evolution
eLTE: enhanced Long Term Evolution
RRC: Radio Resource Control (layer)
MAC: Medium Access Control (layer)
PHY: Physical Layer
PDCCH: Physical Downlink Control Channel
RA: Random Access
PRACH: Physical Random Access Channel
SSB: Synchronization Signal Block
CSI-RS: Channel State Information Reference signal
MAC CE: MAC Control Element
RAR: Random Access Response
HARQ: Hybrid Automatic Repeat Quest

A plurality of embodiments according to the application are specifically described below, with an NR mobile communications system and its subsequent evolved version serving as exemplary application environments, and with a base station and UE that support NR serving as examples. However, it should be noted that the present invention is not limited to the following embodiments, but is applicable to more other wireless communications systems, such as an eLTE communications system, and is applicable to other base stations and UE devices, such as base stations and UE devices supporting eLTE. At the same time, the present invention is not only applicable to scenarios of radio link interruption caused by beams/beam forming, but is also applicable to scenarios of radio link interruption caused by other factors.

In a transmission scenario adopting beam forming, once the detection signal pre-configured for the UE becomes weak or lower than a pre-configured threshold, the physical layer of the UE will provide an indication to the MAC layer, and such indication is called as Beam Failure Instance (BFI).

In the MAC layer, the UE uses the counter BFI COUNTER related to BFI to count the number of indications received.

Each time an indication is received, a detection timer beamFailureDetectionTimer related to beam failure detection will be initiated or reinitiated, and the value of BFI_COUNTER increases by 1.

When the value of BFI_COUNTER is equal to (or exceeds) a specific value, for example, the value of BFI_COUNTER is equal to the preset maximum number of BFI plus one (beamFailureInstanceMaxCount+1), the MAC layer will trigger a random access procedure, that is, the UE will transmit a preamble, requesting to recover a beam failure or requesting for link reconfiguration.

When the detection timer beamFailureDetectionTimer expires, the UE sets BFI Counter to an initial value (for example, the initial value of BFI COUNTER may be zero).

In the triggered random access procedure, a preamble transmission counter (hereinafter referred to as COUNTER) exists to count the number of transmissions of the preamble in the random access procedure. A specific process related to the COUNTER in the random access procedure may include the following:
step 1: initiating the COUNTER; specifically, when the random access procedure is initialized/triggered, setting the value of COUNTER to one;
step 2: counting the number of transmissions of the preamble in the random access procedure; specifically, when the UE does not receive a response directed to the UE within one time window, and when contention-based conflict resolution is unsuccessful (for example, when a contention-based conflict resolution timer expires), increasing the value of COUNTER by 1; and
step 3: determining whether the value of COUNTER is equal to a specific value; for example, the specific value may be equal to the value of the maximum allowed number of transmissions of the preamble plus one.
   - If the value of COUNTER is not equal to the value of the maximum number of transmissions plus one, the UE may continue to transmit the preamble, or may continue to perform step 2.
   - If the value of COUNTER is equal to the value of the maximum number of transmissions plus one, the MAC layer will indicate to the upper layer of the UE that a random access problem has occurred, or indicate to the upper layer of the UE that a problem has occurred. The problem is a random access problem. Such indications are collectively referred to herein and hereinafter as indications of random access problem. Upon receiving the indication, the upper layer may determine that a radio link failure has occurred, and may then trigger an RRC connection re-setup procedure.

Herein, it is determined whether the value of the COUNTER is equal to the maximum number of transmissions plus one, which is equivalent to determining whether the value of the COUNTER exceeds (is greater than) a predetermined maximum number of transmissions. If an initial value of the COUNTER is zero, then the determining herein may be to determine whether the value of the COUNTER is equal to the predetermined maximum number of transmissions.

Several embodiments of the application will be described in detail below.

In order to solve the problem associated with false alarm of random access problems, the solutions described in embodiments 1, 2 and/or 3 may be adopted.

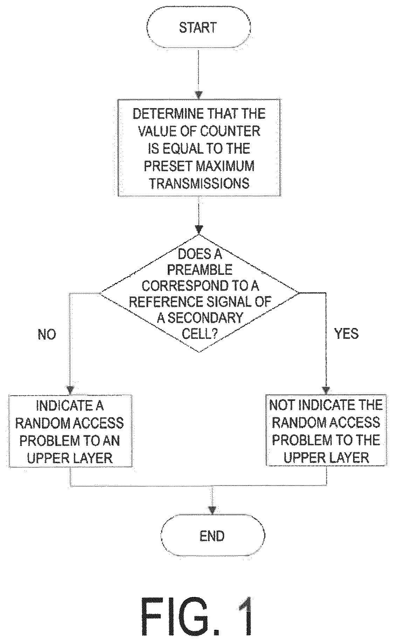

Embodiment 1 will be described in detail below with reference to FIG. 1.

### Embodiment 1

When the value of COUNTER is equal to the maximum number of transmissions plus one, UE determines whether a random access problem needs to be indicated to an upper layer according to whether a preamble transmitted in a random access procedure corresponds to or is associated with a reference signal on a secondary cell. Preferably, the reference signal may be an SSB or CSI-RS signal transmitted by a base station on the secondary cell.

Specifically, the solution of the embodiment may be as follows:
When the value of COUNTER is equal to the maximum number of transmissions plus one:
- If the preamble transmitted in the current random access procedure does not correspond to or is not associated with the reference signal of the secondary cell, the UE, preferably, the MAC layer of the UE, may report or indicate the random access problem to the upper layer. The upper layer herein may be the RRC layer of the UE.
- If the preamble transmitted in the current random access procedure corresponds to or is associated with the reference signal of the secondary cell, the UE, preferably, the MAC layer of the UE, may not report or indicate the random access problem to the upper layer, and alternatively, may report or indicate a beam failure recovery failure to the upper layer. The upper layer herein may be the RRC layer of the UE. Alternatively, the UE determines that the current random access procedure has failed or is not successfully completed.

The preamble corresponding to or being associated with the reference signal of the secondary cell refers to that there is a correspondence or association between the preamble and the reference signal transmitted on the secondary cell. Specifically, the first preamble represents or corresponds to the first reference signal transmitted by the base station on the secondary cell. In particular, the preamble may correspond to the beam direction of the first reference signal. As it can be understood, when the base station receives the first preamble transmitted by the UE, it can be known that the signal quality measured by the UE in the direction of transmitting the first reference signal by the base station meets the measurement requirement.

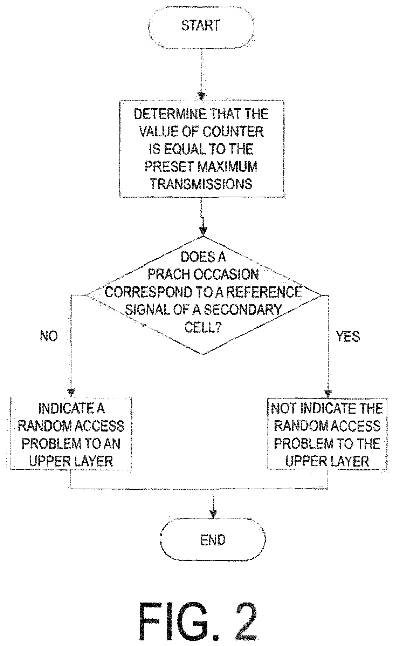

Embodiment 2 will be described in detail below with reference to FIG. 2.

### Embodiment 2

The difference from embodiment 1 is as follows: whether a random access problem needs to be indicated to the upper layer may be determined according to the random access resources. For example, there may be a correspondence or association between the physical random access channel occasion (PRACH occasion) and the reference signal of the secondary cell. A PRACH may be represented by time and frequency. The PRACH occasion may be understood as a PRACH on specific time or frequency, or a PRACH on a carrier or subcarrier. The correspondence or association between the PRACH occasion and the reference signal of the secondary cell may refer to that the random access channel at certain time/frequency/carrier corresponds to or is associated with the reference signal transmitted by the secondary cell or the beam direction of transmitting the reference signal.

Therefore, embodiment 1 may be evolved as follows:
When the value of COUNTER is equal to the maximum number of transmissions plus one, UE determines whether a random access problem needs to be indicated to an upper layer according to whether a PRACH occasion selected or adopted in a random access procedure corresponds to or is associated with a reference signal on a secondary cell.

Specifically, the solution of embodiment 2 may be as follows:
When the value of COUNTER is equal to the maximum number of transmissions plus one:
- If the PRACH occasion selected or adopted in the current random access procedure does not correspond to or is not associated with the reference signal of the secondary cell, the UE, preferably, the MAC layer of the UE, may report or indicate the random access problem to the upper layer. The upper layer herein may be the RRC layer of the UE.
- If the PRACH occasion selected or adopted in the current random access procedure corresponds to or is associated with the reference signal of the secondary cell, the UE, preferably, the MAC layer of the UE, may not report or indicate the random access problem to the upper layer, and alternatively, may report or indicate a beam failure recovery failure to the upper layer. The upper layer herein may be the RRC layer of the UE. Alternatively, the UE determines that the current random access procedure has failed or is not successfully completed.

The PRACH occasion corresponding to or being associated with the reference signal of the secondary cell refers to that there is a correspondence or association between the PRACH occasion and the reference signal transmitted on the secondary cell. Specifically, the first PRACH occasion represents or corresponds to (or is associated with) the first reference signal transmitted by the base station on the secondary cell. In particular, it may correspond to the beam direction of transmitting the first reference signal. As it can be understood, when the base station receives the preamble transmitted by the UE on the first PRACH occasion, it can be known_that the signal quality measured by the UE in the direction of transmitting the first reference signal by the base station meets the measurement requirement.

### Embodiment 3

After the UE transmits the preamble, the UE monitors a PDCCH on the serving cell. The serving cell herein refers to the serving cell involving the beam failure, i.e., the serving cell where the beam failure or beam failure recovery occurs.

When an RAR time window expires, if a PDCCH addressing to a C-RNTI is not correctly received on the serving cell involving beam failure recovery, the UE may determine that random access response reception fails, and increase the value of COUNTER by 1.

If the value of COUNTER is equal to the maximum number of transmissions plus one, the operations in embodiment 1 or embodiment 2 may be performed.

Therefore, as described above, the embodiment of the present disclosure provides a method operating on User Equipment (UE) (preferably, the MAC layer of the UE). The method may include counting the number of transmissions of a preamble in a random access procedure by using a preamble transmission counter (COUNTER); and when the value of the preamble transmission counter (COUNTER) indicates that the number of transmissions of the preamble reaches or exceeds the preset maximum number of transmissions, determining whether to indicate a random access problem to the upper layer of the UE (preferably, the RRC layer of the UE) based on one of the following:
(1) whether the preamble transmitted in the random access procedure corresponds to a reference signal of a secondary cell; or
(2) whether a physical random access channel occasion adopted in the random access procedure corresponds to the reference signal of the secondary cell.

In one embodiment of the present disclosure, when the preamble transmitted in the random access procedure does not correspond to the reference signal of the secondary cell, the random access problem is indicated to the upper layer of the UE; and when the preamble transmitted in the random access procedure corresponds to the reference signal of the secondary cell, the random access problem is not indicated to the upper layer.

In one embodiment of the present disclosure, the reference signal may be an SSB or CSI-RS signal transmitted by a base station on the secondary cell.

In one embodiment of the present disclosure, when the physical random access channel occasion adopted in the random access procedure does not correspond to the reference signal of the secondary cell, the random access problem is indicated to the upper layer of the UE; and when the physical random access channel occasion adopted in the random access procedure corresponds to the reference signal of the secondary cell, the random access problem is not indicated to the upper layer of the UE.

In one embodiment of the present disclosure, the method may further include monitoring a Physical Downlink Control Channel (PDCCH) on a serving cell where beam failure recovery occurs. The step of counting the number of transmissions of the preamble in the random access procedure by using the preamble transmission counter (COUNTER) includes, when a random access response time window expires, if a PDCCH addressing to a Cell Radio Network Temporary Identifier (C-RNTI) is not received on the serving cell where beam failure recovery occurs, determining that random access response reception fails, and increasing the value of the preamble transmission counter (COUNTER) by one.

In order to prevent the random access procedure triggered by beam failure recovery executed by the UE on the secondary cell from failing and triggering the random access procedure again, the solutions described in embodiment 4 to embodiment 8 may be adopted.

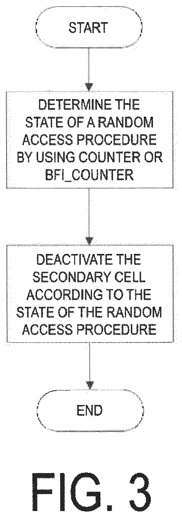

Embodiment 4 and embodiment 5 will be described in detail below with reference to FIG. 3.

### Embodiment 4

When the value of COUNTER is equal to a specific value, for example, preambleTxMax+1, if the preamble of random access is transmitted on the secondary cell, it is considered that the random access procedure is not successfully completed (or that the random access procedure fails), and if the random access procedure is triggered by beam failure recovery, the secondary cell may be deactivated.

The specific description may be as follows:
When the value of COUNTER is equal to a specific value, if the preamble of random access is transmitted on the secondary cell, and if the random access procedure is triggered by beam failure recovery, the secondary cell may be deactivated.

Another implementation of the solution may be as follows:
If the random access procedure is not successfully completed, it may be considered that the beam failure recovery procedure is not successfully completed. When the beam failure recovery procedure is not successfully completed, if the beam failure recovery procedure is for the purpose of beam failure recovery of the secondary cell or beam failure recovery related to the secondary cell, or is a beam failure recovery procedure performed on the secondary cell, the secondary cell may be deactivated.

Another implementation of the solution may also be as follows:
If the random access procedure is successfully completed, it may be considered that the beam failure recovery procedure is successfully completed; otherwise, if the beam failure recovery procedure is for the purpose of beam failure recovery of the secondary cell or beam failure recovery related to the secondary cell, or is a beam failure recovery procedure performed on the secondary cell, the secondary cell may be deactivated.

### Embodiment 5

The difference from embodiment 4 lies in that, in embodiment 5, a beam failure recovery timer beamfailurerecoverytimer is initiated, and when the timer expires, the UE may deactivate the secondary cell.

The specific implementation may be as follows:
When the value of BFI_COUNTER is equal to beamFailureInstanceMaxCount+1, the random access procedure is triggered. If the random access procedure is for the purpose of recovering the beam or link failure on the secondary cell (preferably, when the serving cell triggering the random access procedure is the secondary cell, as it can be described), the beam failure recovery timer beamfailurerecoverytimer is initiated;

When the beamfailurerecoverytimer expires, the cell corresponding to the beamfailurerecoverytimer or the secondary cell may be deactivated.

The "cell corresponding to beamfailurerecoverytimer" or "the secondary cell" refers to the cell that causes beamfailurerecoverytimer to be initiated, the cell that needs to be subjected to beam failure recovery in case of beam failure, or the cell that triggers the random access procedure due to beam failure recovery. Here, the "cell corresponding to beamfailurerecoverytimer" or "the secondary cell" may be specially designated as a secondary cell.

Another implementation of the solution may also be as follows:
An MAC entity sets BFI_COUNTER for each serving cell. In particular, the MAC entity may set respective BFI_COUNTER for each serving cell that adopts beam forming or for each serving cell that allows using beam failure recovery.

If the value of BFI_COUNTER of a secondary cell is equal to beamFailureInstanceMaxCount+1, the random access procedure is triggered and the timer beamfailurerecoverytimer is initiated; and
when the time beamfailurerecoverytimer expires, the cell or the secondary cell may be deactivated.

Herein, deactivating the secondary cell may also be that the UE considers that the cell is in a deactivated state; or the MAC layer indicates to the upper layer (for example, the RRC layer) the information related to the beam failure recovery failure of the secondary cell; based on the indication/information, the upper layer (for example, the RRC layer) of the UE considers that the cell is in a deactivated state, or the upper layer (for example, the RRC layer) of the UE configures the lower layer (for example, the MAC layer or PHY layer) to consider that the cell is in a deactivated state.

Therefore, as described above, the embodiment of the present disclosure provides a method operating on UE. The method may include determining the state of a random access procedure by using a preamble transmission counter (COUNTER) or a counter BFI_Counter related to Beam Failure Instance (BFI); and deactivating a secondary cell based on one of the following according to the state of the random access procedure:
(1) a preamble in the random access procedure is transmitted on the secondary cell and the random access procedure is triggered by beam failure recovery;
(2) when the random access procedure is not successfully completed, a beam failure recovery procedure is not successfully completed, and the beam failure recovery procedure is a beam failure recovery procedure related to the secondary cell or a beam failure recovery procedure performed on the secondary cell; or
(3) when the random access procedure is related to beam failure recovery on the secondary cell, a beam failure recovery timer is initiated, and the beam failure recovery timer expires.

In one embodiment of the present disclosure, the step of determining the state of the random access procedure by using the preamble transmission counter (COUNTER) may include, when the value of COUNTER is equal to a specific value, determining whether the preamble of the random access procedure is transmitted on the secondary cell and whether the random access procedure is triggered by beam failure recovery.

In one embodiment of the present disclosure, the step of determining the state of the random access procedure by using the counter BFI_Counter related to BFI may include, when the value of BFI_COUNTER is equal to a specific value, triggering the random access procedure, and determining whether the random access procedure is related to beam failure recovery on the secondary cell.

In one embodiment of the present disclosure, the step of determining the state of the random access procedure by using the counter BFI_Counter related to BFI may include, when the value of BFI_COUNTER configured by the MAC entity for the secondary cell is equal to a specific value, triggering the random access procedure.

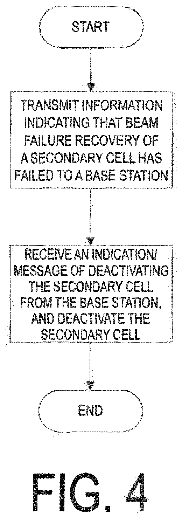

Embodiment 6 will be described in detail below with reference to FIG. 4.

### Embodiment 6

Different from embodiment 4/5, in embodiment 6, the UE may also transmit information to the base station to indicate that a beam failure recovery failure has occurred in the secondary cell, and the base station may, upon receiving the information, transmit an indication/message of deactivating the secondary cell to the UE, or transmit an indication/message containing the configuration information related to the link/beam to the UE.

In order to inform the base station that the beam failure recovery of the secondary cell has failed, the UE may transmit information indicating that the beam failure recovery of the secondary cell has failed to the base station. The information at least carries the cell ID of the secondary cell, and optionally carries the information related to the measurement.

One implementation of indicating to the base station that the beam failure recovery of the secondary cell has failed is to inform the base station by adopting an MAC CE.

When the beam failure recovery fails, or the random access procedure triggered by the beam failure recovery is not successfully completed, the UE may generate an MAC CE. The MAC CE at least carries the serial number or cell ID of the secondary cell in which the beam failure recovery failure took place. Specifically, if the beam failure recovery initiated on the secondary cell fails, or the random access procedure triggered by the beam failure recovery is not successfully completed, the cell ID of the cell is reported on the MAC CE.

In addition, when the MAC CE is generated, the UE may deactivate the secondary cell.

Therefore, as described above, the embodiment of the present disclosure provides a method operating on UE. The method may include transmitting information indicating that beam failure recovery of a secondary cell has failed to a base station to indicate to the base station that the beam failure recovery of the secondary cell has failed; and receiving an indication/message of deactivating the secondary cell from the base station, and deactivating the secondary cell.

In one embodiment of the present disclosure, the step of transmitting information indicating that the beam failure recovery of the secondary cell has failed to the base station to indicate to the base station that the beam failure recovery of the secondary cell has failed may include, when the beam failure recovery of the secondary cell fails, generating MAC layer control information (MAC CE) to indicate to the base station that the beam failure recovery of the secondary cell has failed through the MAC CE.

In one embodiment of the present disclosure, the information indicating that the beam failure recovery has failed in the secondary cell may include the cell ID of the secondary cell, and optionally, the information related to the measurement.

In one embodiment of the present disclosure, the MAC CE may include the cell ID of the secondary cell in which the beam failure recovery failure took place, and the method may further include, when the beam failure recovery of the secondary cell fails, reporting the cell ID of the secondary cell on the MAC CE.

### Embodiment 7

In regard to deactivating the secondary cell described in embodiment 4, embodiment 5 or embodiment 6, the following applies: whether the UE deactivates the secondary cell or the UE deactivates the secondary cell upon receiving the message of deactivating the secondary cell transmitted by the base station, at least one or more of the following operations may be included:
stopping the timer related to the secondary cell, such as the secondary cell deactivation timer sCellDeactivationTimer, the partial bandwidth inactivity timer bandwidthPartInactivityTimer, or the detection timer beamFailureDetectionTimer, wherein the stopping may be to stop the operating timer and set the timer to the initial value;
clearing any downlink assignment and any uplink grant Type 2 configured on the secondary cell;
suspending any uplink grant Type 1 configured on the secondary cell;
flushing cache of all HARQ associated with the secondary cell; and
flushing the counter related to the secondary cell, such as BFI_COUNTER, wherein the flushing may refer to setting the counter to the initial value.

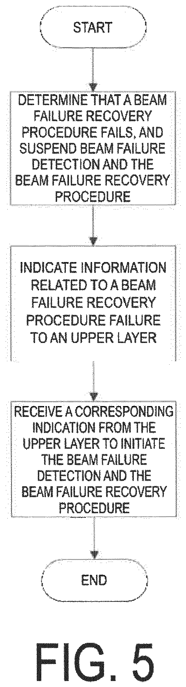

Embodiment 8 will be described in detail below with reference to FIG. 5.

### Embodiment 8

When the random access procedure triggered by beam failure recovery is not successfully completed or fails, the UE may determine that the beam failure recovery procedure is not successfully completed or has failed, and the UE may suspend the beam failure detection and recovery procedure or related procedure, and indicate the information about the beam failure recovery failure to the upper layer.

The suspending the beam failure detection and recovery procedure may be that the MAC no longer processes the BFI indication reported by the physical layer PHY layer. For example, when the BFI indication arrives, the value of BFI COUNTER will not be updated, or the detection timer beamFailureDetectionTimer is not initiated.

The suspending may also be that the MAC layer indicates the lower layer (for example, physical layer PHY) to not report the BFI indication.

The suspending may also be that the UE does not trigger the random access procedure, that is, when the value of BFI COUNTER reaches a specific value, if the UE is in the state of suspending the beam failure detection and recovery procedure, the random access procedure is not triggered. In other words, only when the value of BFI COUNTER reaches a specific value and the UE is not in the state of suspending the beam failure detection and recovery procedure, the random access procedure is triggered.

Such a suspending operation will continue until the MAC layer of the UE receives an indication from the upper layer (for example, the RRC layer). When the UE receives the indication from the upper layer, for example, indicating the UE to resume or initiate/reinitiate the beam failure detection and recovery procedure, the UE may continue to perform the beam failure detection and recovery procedure. The specific process of resuming or initiating/reinitiating the beam failure detection and recovery procedure may be as follows: when receiving the indication, the UE resets BFI_COUNTER to the initial value, and when receiving the BFI indication, the UE initiates or reinitiates the detection timer beamFailureDetectionTimer. It may also be indicating the lower layer (physical layer) to report the BFI indication when the BFI is detected; it may also be triggering the random access procedure when the value of BFI_COUNTER reaches a specific value.

Another implementation of resuming or initiating/reinitiating the beam failure detection and recovery procedure may be as follows:
In step 1, when receiving the indication from the upper layer, the UE initiates the beam failure detection and recovery procedure. This indication may be an explicit indication or an implicit indication. For example, when the UE receives parameter configuration information related to beam management or beam failure detection or completes parameter configuration related to beam management or beam failure detection, or the UE is configured with parameters related to beam management or beam failure detection, or the upper layer of the UE generates an RRC reconfiguration completion message and a new configuration is adopted, it can be considered that the UE has received the indication of initiating the beam failure detection and recovery procedure.
In step 2, when the value of BFI COUNTER reaches a specific value, the random access procedure is triggered.
In step 3, if the random access procedure triggered in step 2 is not successfully completed, it can be determined that the beam failure recovery fails, and the information related to the failure can be indicated to the upper layer.
In step 4, the UE may actively perform the relevant operations (for example, the suspending operation) described above, or the UE may, upon receiving the indication from the upper layer which indicates to suspend the beam failure detection and recovery procedure, perform the relevant operations (for example, about suspending operation) described above. This indication may be an explicit indication, or an implicit indication. For example, when the UE receives a reconfiguration message containing the information of the target primary cell, which indicates the UE to synchronize with a new cell, it can be considered that the UE has received the indication of suspending the beam failure detection and recovery procedure.
In step 5, when the UE receives indication from the upper layer to reinitiate the beam failure detection and recovery procedure, the UE performs the relevant operations (for example, the operation of resuming, initiating or reinitiating the beam failure detection and recovery procedure), and repeats the operation in step 2.

The indications in step 1 and step 5 may be indication information of the same way or method.

Therefore, as described above, the embodiment of the present disclosure provides a method operating on UE. The method includes, when a random access procedure triggered by beam failure recovery is not successfully completed, determining that a beam failure recovery procedure has failed, and suspending the beam failure detection and the beam failure recovery procedure; indicating information related to a beam failure recovery procedure failure to an upper layer; and receiving a corresponding indication from the upper layer to initiate the beam failure detection and the beam failure recovery procedure.

In one embodiment of the present disclosure, the step of initiating the beam failure detection and the beam failure recovery procedure includes at least one of the following operations:
(1) resetting a counter BFI_COUNTER related to Beam Failure Instance (BFI) to an initial value, and when a BFI indication is received, initiating a detection timer related to the beam failure detection;
(2) indicating a lower layer to report the BFI indication when the BFI is detected;
(3) when the value of the counter BFI_COUNTER related to BFI reaches a specific value, triggering the random access procedure; or
(4) when the value of the counter BFI COUNTER related to BFI reaches a specific value, triggering the random access procedure, and if the random access procedure is not successfully completed, determining that the beam failure recovery procedure has failed, indicating the information related to the failure to the upper layer, and receiving an indication from the upper layer to suspend the beam failure detection and the beam failure recovery procedure or initiating the beam failure detection and the beam failure recovery procedure.

In one embodiment of the present disclosure, the suspending operation may include at least one of the following operations: (1) not processing the BFI indication reported by the lower layer; (2) indicating the lower layer to not report the BFI indication; or (3) not triggering the random access procedure.

In the above implementation, the upper layer may indicate to the MAC layer, based on the timer mechanism, to resume, initiate or reinitiate the beam failure detection and recovery procedure. For example, when the upper layer receives the indication of beam failure recovery failure, the timer is initiated, and if one or more synchronization signals indicated by the lower layer (which may be the physical layer here) are received during the operation of the timer, the timer is stopped and the lower layer (which may be the MAC layer here) is indicated to resume the operation; and if the operation of the timer expires, the upper layer may determine that a link failure occurs, and perform the operation related to the link failure, for example, resetting the MAC layer.

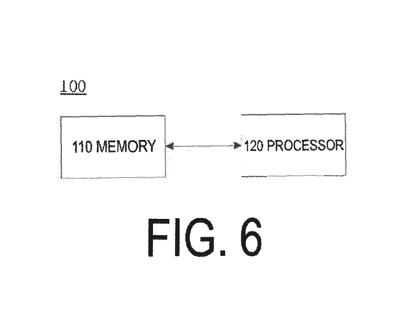

Embodiment 9 will be described in detail below with reference to FIG.6.

### Embodiment 9

Referring to FIG. 6, UE 100 according to one embodiment of the application may include a memory 110 and a processor 120. The memory 110 may store instructions or codes for executing the operations described according to any one of embodiments 1 to embodiment 8. The processor 120 may be configured to execute the instructions or codes stored in the memory 110.

According to one embodiment of the present disclosure, UE is provided. The UE includes a memory (for example, 110) for storing instructions and a processor (for example, 120). The processor is configured to execute the instructions stored in the memory to count the number of transmissions of a preamble in a random access procedure by using a preamble transmission counter (COUNTER); and when the value of the preamble transmission counter (COUNTER) indicates that the number of transmissions of the preamble reaches or exceeds the preset maximum number of transmissions, determine whether to indicate a random access problem to the upper layer (preferably, the upper layer may be the RRC layer of the UE) of the UE based on one of the following: (1) whether the preamble transmitted in the random access procedure corresponds to a reference signal of a secondary cell; or (2) whether a physical random access channel occasion adopted in the random access procedure corresponds to the reference signal of the secondary cell.

According to one embodiment of the present disclosure, UE is provided. The UE includes a memory (for example, 110) for storing instructions and a processor (for example, 120). The processor is configured to execute the instructions stored in the memory to determine the state of a random access procedure by using a preamble transmission counter (COUNTER) or a counter BFI Counter related to Beam Failure Instance (BFI); and deactivate a secondary cell based on one of the following according to the state of the random access procedure: (1) a preamble in the random access procedure is transmitted on the secondary cell and the random access procedure is triggered by beam failure recovery; (2) when the random access procedure is not successfully completed, a beam failure recovery procedure is not successfully completed, and the beam failure recovery procedure is a beam failure recovery procedure related to the secondary cell or a beam failure recovery procedure performed on the secondary cell; or (3) when the random access procedure is related to beam failure recovery on the secondary cell, a beam failure recovery timer is initiated, and the beam failure recovery timer expires.

According to one embodiment of the present disclosure, UE is provided. The UE includes a memory (for example, 110) for storing instructions and a processor (for example, 120). The processor is configured to execute the instructions stored in the memory to transmit information indicating that beam failure recovery of a secondary cell has failed to a base station to indicate to the base station that the beam failure recovery of the secondary cell has failed; and receive an indication/message of deactivating the secondary cell from the base station, and deactivate the secondary cell.

According to one embodiment of the present disclosure, UE is provided. The UE includes a memory (for example, 110) for storing instructions and a processor (for example, 120). The processor is configured to execute the instructions stored in the memory to, when a random access procedure triggered by beam failure recovery is not successfully completed, determine that a beam failure recovery procedure has failed, and suspend the beam failure detection and the beam failure recovery procedure; indicate information related to a beam failure recovery procedure failure to an upper layer; and receive a corresponding indication from the upper layer to initiate the beam failure detection and the beam failure recovery procedure.

The program running on the device according to the present invention may be a program that enables the computer to implement the functions of the embodiments of the present invention by controlling the central processing unit (CPU). The program or information processed by the program can be stored temporarily in volatile memory (e.g., random access memory RAM), hard disk drive (HDD), non-volatile memory (e.g., flash memory), or other memory systems.

The program for implementing the functions of the embodiments of the present invention may be recorded on a computer-readable recording medium. The corresponding functions can be achieved by reading programs recorded on the recording medium and executing them by the computer system. The so-called "computer system" may be a computer system embedded in the device, which may include operating systems or hardware (e.g., peripherals). The "computer-readable recording medium" may be a semiconductor recording medium, an optical recording medium, a magnetic recording medium, a short-time dynamic memory program, or any other recording medium readable by a computer.

Various features or functional modules of the device used in the above embodiments may be implemented or executed by circuits (e.g., monolithic or multi-chip integrated circuits). Circuits designed to execute the functions described in this description may include general-purpose processors, digital signal processors (DSPs), application specific integrated circuits (ASICs), field programmable gate arrays (FPGAs) or other programmable logic devices, discrete gates or transistor logic, or discrete hardware components, or any combination of the above. The general-purpose processor may be a microprocessor, or may be any existing processor, a controller, a microcontroller, or a state machine. The circuit may be a digital circuit or an analog circuit. When new integrated circuit technologies that replace existing integrated circuits emerge because of the advances in semiconductor technology, one or a plurality of embodiments of the present invention may also be implemented using these new integrated circuit technologies.

Furthermore, the present invention is not limited to the embodiments described above. Although various examples of the described embodiments have been described, the present invention is not limited thereto. Fixed or non-mobile electronic devices installed indoors or outdoors, such as AV equipment, kitchen equipment, cleaning equipment, air conditioner, office equipment, vending machines, and other household appliances, may be used as UE devices or communications devices.

The embodiments of the present invention have been described in detail above with reference to the accompanying drawings. However, the specific structures are not limited to the above embodiments, and the present invention also includes any design modifications that do not depart from the main idea of the present invention. In addition, various modifications can be made to the present invention within the scope of the claims, and embodiments resulting from the appropriate combination of the technical means disclosed in different embodiments are also included within the technical scope of the present invention. In addition, components with the same effect described in the above embodiments may be replaced with one another.

## Claims

1. A method operating on User Equipment (UE), the method comprising:
counting the number of transmissions of a preamble in a random access procedure by using a preamble transmission counter (COUNTER); and
when the value of the preamble transmission counter (COUNTER) indicates that the number of transmissions of the preamble reaches or exceeds the preset maximum number of transmissions, determining whether to indicate a random access problem to the upper layer of the UE based on one of the following:
(1) whether the preamble transmitted in the random access procedure corresponds to a reference signal of a secondary cell; or
(2) whether a physical random access channel occasion adopted in the random access procedure corresponds to the reference signal of the secondary cell.

2. The method according to claim 1, further comprising:
when the preamble transmitted in the random access procedure does not correspond to the reference signal of the secondary cell, indicating the random access problem to the upper layer of the UE; and
when the preamble transmitted in the random access procedure corresponds to the reference signal of the secondary cell, not indicating the random access problem to the upper layer.

3. The method according to claim 1, further comprising:
when the physical random access channel occasion adopted in the random access procedure does not correspond to the reference signal of the secondary cell, indicating the random access problem to the upper layer of the UE; and
when the physical random access channel occasion adopted in the random access procedure corresponds to the reference signal of the secondary cell, not indicating the random access problem to the upper layer of the UE.

4. The method according to claim 1, further comprising: monitoring a Physical Downlink Control Channel (PDCCH) on a serving cell where beam failure recovery occurs, wherein
the step of counting the number of transmissions of a preamble in a random access procedure by using a preamble transmission counter (COUNTER) comprises:
when a random access response time window expires, if a PDCCH addressing to a Cell Radio Network Temporary Identifier (C-RNTI) is not received on the serving cell where beam failure recovery occurs, determining that random access response reception has failed, and increasing the value of the preamble transmission counter (COUNTER) by 1.

5. A method operating on User Equipment (UE), the method comprising:
determining the state of a random access procedure by using a preamble transmission counter (COUNTER) or a counter BFI_Counter related to Beam Failure Instance (BFI); and
deactivating a secondary cell based on one of the following according to the state of the random access procedure:
(1) a preamble in the random access procedure is transmitted on the secondary cell and the random access procedure is triggered by beam failure recovery;
(2) when the random access procedure is not successfully completed, a beam failure recovery procedure is not successfully completed, and the beam failure recovery procedure is a beam failure recovery procedure related to the secondary cell or a beam failure recovery procedure performed on the secondary cell; or
(3) when the random access procedure is related to beam failure recovery on the secondary cell, a beam failure recovery timer is initiated, and the beam failure recovery timer expires.

6. A method operating on User Equipment (UE), the method comprising:
transmitting information indicating that beam failure recovery of a secondary cell has failed to a base station to indicate to the base station that the beam failure recovery of the secondary cell has failed; and
receiving an indication/message of deactivating the secondary cell from the base station, and deactivating the secondary cell.

7. The method according to claim 6, wherein the step of transmitting information indicating that the beam failure recovery has failed in the secondary cell to the base station to indicate to the base station that the beam failure recovery has failed in the secondary cell comprises:
when the beam failure recovery of the secondary cell fails, generating MAC layer control information (MAC CE) to indicate to the base station that the beam failure recovery of the secondary cell has failed through the MAC CE.

8. The method according to claim 5 or 6, wherein the step of deactivating the secondary cell comprises at least one of the following operations:
stopping a timer related to the secondary cell;
clearing any downlink assignment and any uplink grant Type 2 configured on the secondary cell;
suspending any uplink grant Type 1 configured on the secondary cell;
flushing cache of all Hybrid Automatic Repeat Requests (HARQ) associated with the secondary cell; and
flushing the counter related to the secondary cell.

9. A method operating on User Equipment (UE), the method comprising:
when a random access procedure triggered by beam failure recovery is not successfully completed, determining that a beam failure recovery procedure has failed, and suspending beam failure detection and the beam failure recovery procedure;
indicating information related to a beam failure recovery procedure failure to an upper layer; and
receiving a corresponding indication from the upper layer to initiate the beam failure detection and the beam failure recovery procedure.

10. The method according to claim 9, wherein the step of initiating the beam failure detection and the beam failure recovery procedure comprises at least one of the following operations:
(1) resetting a counter BFI_COUNTER related to Beam Failure Instance (BFI) to an initial value, and when a BFI indication is received, initiating a detection timer related to the beam failure detection;
(2) indicating a lower layer to report the BFI indication when the BFI is detected;
(3) when the value of the counter BFI_COUNTER related to BFI reaches a specific value, triggering the random access procedure; or
(4) when the value of the counter BFI_COUNTER related to BFI reaches a specific value, triggering the random access procedure, and if the random access procedure is not successfully completed, determining that the beam failure recovery procedure fails, indicating the information related to the failure to the upper layer, and receiving an indication from the upper layer to suspend the beam failure detection and the beam failure recovery procedure or initiating the beam failure detection and the beam failure recovery procedure.
